# EUROPEAN PATENT APPLICATION

(11) **EP 2 919 211 A1**
(43) Date of publication of application: **16.09.2015**
(21) Application number: 15158127.9
(22) Date of filing: 07.03.2015
(51) Int. Cl.: G08B 13/12, B60R 25/10

(54) **Digital tracking and control system for the safety rope of lorries**

(30) Priority: 10.03.2014 TR 201402777
(71) Applicant: FHM Bilgisayar ve Yazilim Sistemleri Ticaret Limited Sirketi, Istanbul (TR)
(72) Inventor: Yilanli, Firat, Istanbul (TR)
(74) Representative: Iskender, Ibrahim

(57) **Abstract**

The invention is a digital tracking and control system to allow the detection of whether any intervention is made or not to the load through the rope (10) which interconnects the frame of the curtain-sided lorry (A) trailer used in international transportation and the curtain thereof and the ends of which are connected to each other by a seal (14) after the loading process. The system comprises a conductor wire (11) disposed in the inner section of and along said rope (10); current conducting ends (12) each one of which is connected to each one end of the rope (10) in a manner to contact said conductor wire (11); a kit (20) which serves as M2M and GSM modem, supplies current (I) to the conductor wire (11) and allows the tracking and control of the supplied current (I) along the rope (10); a current feeder (30) which is linked to said kit (20) and connected with current conducting ends (12), and thus allows the link between said kit (20) and conductor wire (11) and the flow of the current (I) in a manner to provide a closed loop along the conductor wire (11); and a central server (40) to which the current (I) values detected by the kit (20) are transferred.

## Description

### TECHNICAL FIELD

The invention relates to a system which provides the detection of whether any illegal intervention to the load transported by the curtain-sided lorry trailers which are used in international transportation, is made or not.

The invention especially relates to a system which allows said detection to be performed based on conducting current through conductor wire in the inner surface of the rope interconnecting the frame and the curtain of the lorry trailer and on a potential failure during passage of current.

### PRIOR ART

The transportation rules of the lorry trailers used in international transportation have been determined within the scope of international TIR convention and TIR regulation. In case of going beyond the determined rules, owners or drivers of the lorries are heavily penalized.

Significant tax control and audit mechanisms are available especially with respect to the transported loads in international transportation. That the vehicle is opened in areas outside customs territory and permitted territories and that intervention is made to the transported load is prohibited as said situations can pave the way for attempts such as trafficking in trade, humans or drugs. To supervise said prohibition, the frame and curtain of the lorry trailer are interconnected by means of the ropes the standards of which are determined according to the United Nations TIR convention and TIR regulation subsequent to loading. Then, the rope end is sealed. It is required that the seal not be broken until reaching the area to which the load is transferred and that there not be any joint, cut, etc. on the rope. However, in this application, control is performed visually by the people in charge and thus, an objective control cannot be achieved. This flexibility may be abused by malicious people and an illegal intervention may be made to the transported load. Upon detecting such situations, however, not the driver but the owner of the vehicle is penalized. Although the person or the company, owner of the vehicle, does not have a role in action, they are subjected to serious legal and tax-related sanctions.

A configuration which will eliminate the aforementioned problems is not available in state of the art. Therefore, a system which allows digital control and tracking of the load is required to be developed in the related technical field.

### BRIEF DESCRIPTION OF THE INVENTION

The present invention relates to a digital tracking and control system for the safety rope of the lorry in order to eliminate the aforementioned disadvantages and to offer new advantages to the related technical field.

The main object of the invention is to present a digital tracking and control system which will provide instantaneous detection of illegal interventions made to the load transported by the curtain-sided lorry trailers which are used in international transportation.

Another object of the invention is to present a digital tracking and control system which will prevent the illegal attempts such as theft, trafficking in cigarettes/alcohol/drugs and in humans, in international transportation.

Yet another object of the invention is to present a digital tracking and control system which will enable the person or the companies, lorry owners, to track their vehicles while en route and will enable the same to detect the actions likely to harm them.

To achieve all the objects mentioned above and to be further understood from the description below, the present invention relates to a digital tracking and control system to allow the detection of whether any intervention is made or not to the load through the rope which interconnects the frame of the curtain-sided lorry trailer used in international transportation and the curtain thereof and the ends of which are sealed together after the loading process is completed. Said system basically comprises the following elements:
- A conductor wire disposed in the inner section of and along said rope,
- Current conducting ends each one of which is connected to each one end of the rope in a manner to contact said conductor wire,
- A kit which serves as M2M and GSM modem, supplies current to the conductor wire and allows the tracking and control of the supplied current along the rope,
- A current feeder which is linked to said kit and connected with current conducting ends, and thus allows the link between said kit and conductor wire and the flow of the current in a manner to provide a closed loop along the conductor wire.
- A central server to which the current values detected by the kit are transferred.

Operating principle of the system according to the invention is based on tracking the current and/or voltage values on the rope and detecting whether or not any intervention is made to the transported load in accordance with the deviations occurring in these values. Accordingly, some terms are described below.

### Voltage

The force causing electric current to flow from the circuit by moving the free electrons is called Voltage. Volt is the unit of voltage. It is abbreviated as V or E. Current is supplied to the conductor wire on the rope by means of the current conducting end and current feeder, and the relevant voltage (V) values are tracked.

### Resistance Measurement

The strength of the conducting objects against the current passing therethrough is called resistance. Ohm is the unit of resistance. Current is supplied to the conductor wire on the rope by means of the current conducting end and current feeder, and the relevant resistance (Ohm) values are tracked.

### Pulse Measurement

Pulse is the current wave in which the current is not stable and is used in a discontinuous manner, and it is defined in two different categories. It can have a unipolar waveform where all the current is in one direction or have bipolar waveforms where anodic and cathodic pulses are mixed. Pulse on-(Ton) and pulse off-(Toff) are the units of pulse. Current is supplied to the conductor wire on the rope by means of the current conducting end and current feeder, and the relevant pulse on-(Ton) and pulse off-(Toff) values are tracked.

In a preferred embodiment of the invention, in order to provide stability of the current on the conductor wire, connectors are disposed each one of which is connected to each one end of the rope in a manner to contact the conductor wire. Said connector is aluminum preferably.

In another preferred embodiment of the invention, said central server sends the current values, which are transferred thereto, to an end user device via secure internet protocols. And the end user device sends request to the central server via secure internet protocols to be sent to the kit for tracking and controlling the current.

The present invention should be evaluated with the figures described below to ensure the best understanding of the embodiment and advantages together with the additional elements of the invention.

### BRIEF DESCRIPTION OF THE FIGURES

Figure 1 is side and rear perspective views of the lorry to which the system according to the invention is assumed to have been applied.
Figure 2 is a schematic view of the elements constituting the system according to the invention.
Figure 3 is a schematic view of the elements of the system according to the invention which are adapted on the lorry.

### REFERENCE NUMBERS

100 Tracking and Control System
10 Rope
   11 Conductor Wire
   12 Current Conducting End
   13 Connector
   14 Seal
20 Kit
30 Current Feeder
40 Central Server
50 End User Device
I: Current
A: Lorry

### DETAILED DESCRIPTION OF THE INVENTION

In this detailed description, the novelty according to the invention is described only for a better understanding of the subject, without any limiting effects, by means of illustrations. Accordingly, in the description and figures below, a tracking and control system is disclosed which allows the detection of the illegal interventions made to the load transported in the lorry (A) trailers used in international load transportation.

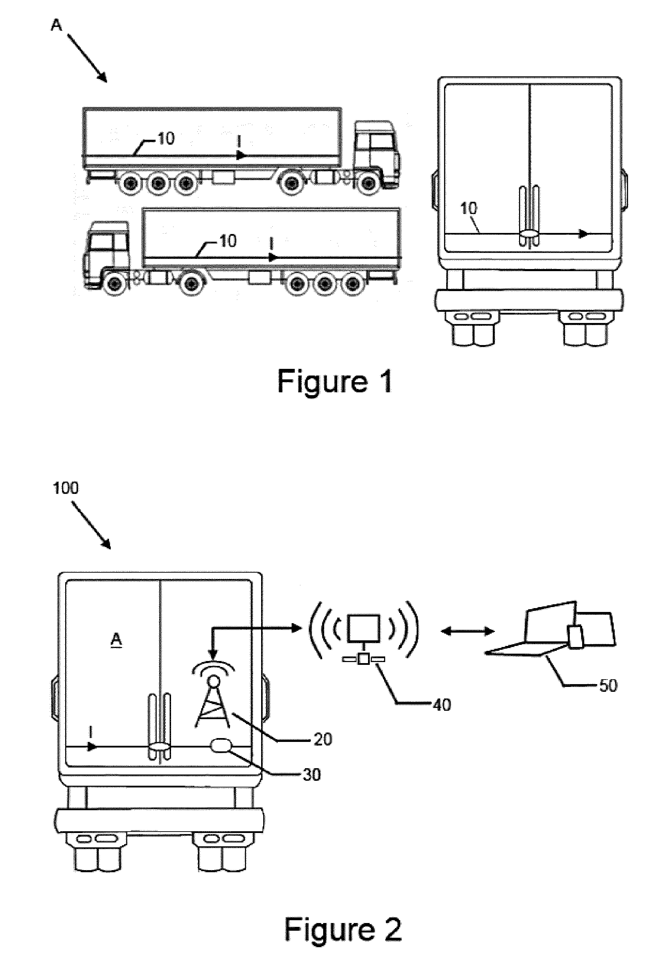

Figure 1 is side and rear perspective view of the lorry (A) to which the tracking and control system according to the invention is applied. Said lorry (A) is surrounded by a rope (10) interconnecting the frame and curtain thereof and the end sections of the rope (10) are connected to each other by a seal (14). The rope (10) conforms to the United Nations TIR Convention and TIR Regulation standards.

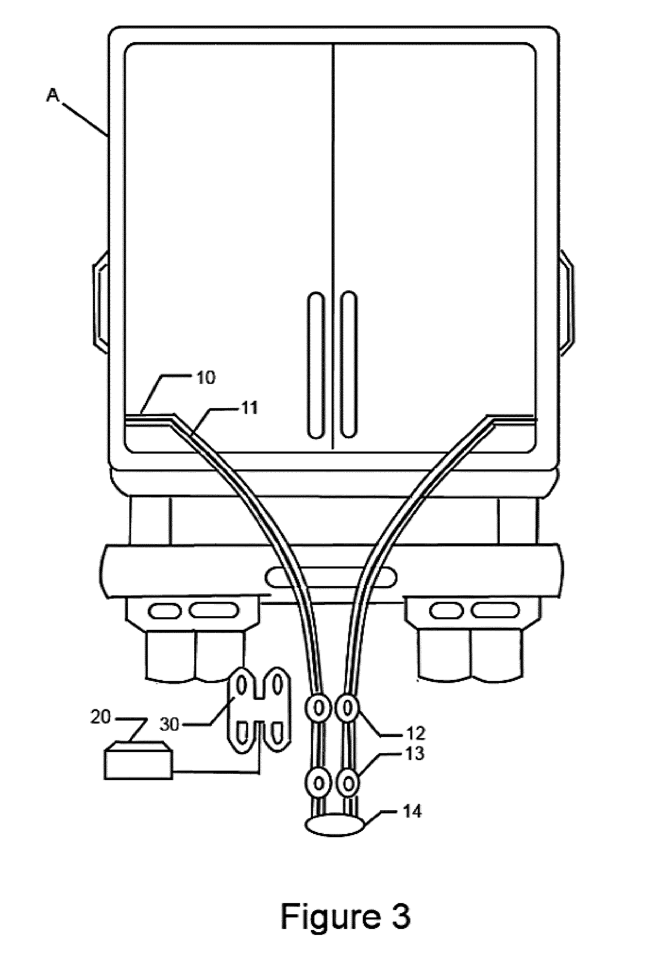

Referring to Figure 3, a conductor wire (11) which is disposed in the inner section of and along said rope (10) and allows passage of the current (I) is provided. Said conductor wire (11) is preferably steel and coated with brass. Current conducting ends (12) and connectors (13) are disposed each one of which is provided in each one end of the rope (10) in a manner to reach the conductor wire. Said connectors (13) provide the stability of the current (I) passing through the conductor wire (11). The connectors (13) contact the conductor wire (11) by means of the current conducting end (12), wherein they can contact the conductor wire (11) with the use of different methodologies as well.

Figure 2 is a schematic view of the tracking and control system according to the invention. Accordingly, the system comprises a kit (20) allowing passage of current (I) through the conductor wire and tracking said current (I). Said kit (20) is a device serving as M2M and GSM modem and is linked with the rope (10) by means of a current feeder (30). With a detailed description, the current feeder (30) linked to the kit (20) is connected with the current conducting end (12) and connectors (13) provided at the ends of the conductor wire (11), thereby providing the link between the kit (20) and the conductor wire (11). Said connectors (13) are circuit complementary elements continuously operating in coordination with the kit (20) and having the functions of conducting current through the rope (10) and controlling the same within the scope of the instructions (e.g. starting the current, providing the interval of current, cutting/controlling the current) received from the kit (20). The current feeder (30), moreover, allows the flow of the current (I) along the conductor wire (11) in a manner to provide a closed loop.

Kit (20) tracks the passage of the current (I) through the conductor wire (11) and transfers the current (I) values to a central server (40) via secure internet protocols. Secure internet protocols is a software system which prevents the information packages circulating in the internet from being opened by encoding the same with certain security software. The central server (40), on the other hand, sends the information, which is transferred thereto, to the end user devices (50) via secure internet protocols. What is meant by the end user devices (50) is the hardware such as smartphones, tablets, computers, servers under the control of those tracking the current (I) values. The information reaching said hardware is analyzed by the end users. The described communication can be provided in a reverse manner. The instructions sent to the central server (40) by means of the end user devices (50) via secure internet protocols are similarly transferred to the kit (20) serving as M2M and GSM modem. In accordance with the received instruction, the kit (20) controls values of the current (I) passing through the conductor wire (11) and transfers the results to the end user devices (50). In this manner, an interactive structure is constructed.

In accordance with the information above, the basic operating principle of the system according to the invention is as follows:
- Supplying current (I) to the conductor wire (11) within the rope (10),
- Tracking the flow of the current (I) through the conductor wire (11),
- Sending the current (I) values to a central server (40) via secure internet protocols in order to be analyzed and transferring said values to the end user devices (50) by the central server (40).

In the analysis made by the end user, the order and deviations in the current (I) values are taken as a base. Any deviation or cut in the current (I) value means that an intervention is made to this rope (10). And this intervention made to the rope (10) means an illegal intervention which is made to the transported load in an area outside the customs territory, namely, unloading or loading the vehicle. As such cases can be tracked with the system according to the invention, the attempts such as smuggling, theft, etc. can be prevented.

The system according to the invention cannot be limited to the descriptions herein and the models shown in the figures. Modifications can be made for the figure independently from the material and size on the invention. The location and number of the elements used can be changed and auxiliary hardware can be added. For instance, with a hardware or software to be installed to the kit (20), an electronic seal system can be formed or a rope structure can be formed when control of the rear door is made by a sensor thanks to the fact that the kit (20) is mounted to the rear door of the trailer and the doors are tracked by sensors.

## Claims

1. A digital tracking and control system to allow the detection of whether any intervention is made or not to the load through the rope (10) which interconnects the frame of the curtain-sided lorry (A) trailer used in international transportation and the curtain thereof and the ends of which are connected to each other by a seal (14) after the loading process, **characterized in** comprising
- a conductor wire (11) disposed in the inner section of and along said rope (10);
- current conducting ends (12) each one of which is connected to each one end of the rope (10) in a manner to contact said conductor wire (11);
- a kit (20) which serves as M2M and GSM modem, supplies current (I) to the conductor wire (11) and allows the tracking and control of the supplied current (I) along the rope (10);
- a current feeder (30) which is linked to said kit (20) and connected with current conducting ends (12), and thus allows the link between said kit (20) and conductor wire (11) and the flow of the current (I) in a manner to provide a closed loop along the conductor wire (11);
- a central server (40) to which the current (I) values detected by the kit (20) are transferred.

2. The digital control and tracking system according to Claim 1, **characterized in** comprising connectors (13) each one of which is connected to each one end of the rope (10) in a manner to contact the conductor wire (11), in order to provide stability of the current (I) on the conductor wire (11).

3. The digital control and tracking system according to Claim 2, **characterized in** comprising an end user device (50) to which said central server (40) sends the current (I) values that are transferred thereto, and which sends data to the central server (40) in order to be sent to the kit (20).

4. The detection method of whether any intervention is made or not to the load through the rope (10) which interconnects the frame of the curtain-sided lorry (A) trailer used in international transportation and the curtain thereof and the ends of which are connected to each other by a seal (14) after the loading process, **characterized in** comprising the following process steps;
- Supplying current (I) to the conductor wire (11) within the rope (10),
- Tracking the flow of the current (I) through the conductor wire (11),
- Detecting the current (I) values and the rope (10) integrity by means of the kit (20) and sending the same to a central server (40) via secure internet protocols in order to be analyzed.

5. The digital control and tracking method according to Claim 4, **characterized in that** said central server (40) sends the current (I) values and the rope (10) integrity to the end user devices (50) of the person or companies via secure internet protocols by detecting the same by means of the kit (20).

6. The digital control and tracking method according to Claim 4, **characterized in that** data is sent to the central server (40) via secure internet protocols by the end user devices (50) for the measurement of the current (I) values and rope (10) integrity by detecting the same by means of the kit (20).
